## Europäisches Patentamt
## European Patent Office
## Office européen des brevets

(19)

(11) Veröffentlichungsnummer : **0 023 690**
**B1**

(12) **EUROPÄISCHE PATENTSCHRIFT**

(45) Veröffentlichungstag der Patentschrift :
09.03.83

(51) Int. Cl.³ : **B 06 B   1/10**

(21) Anmeldenummer : **80104426.4**

(22) Anmeldetag : **28.07.80**

(54) Schwingkörper zur Umwandlung einer Drehbewegung in eine hin- und hergehende Bewegung.

(30) Priorität : **02.08.79 DE 2931479**

(43) Veröffentlichungstag der Anmeldung :
**11.02.81 Patentblatt 81/06**

(45) Bekanntmachung des Hinweises auf die Patenterteilung : **09.03.83 Patentblatt 83/10**

(84) Benannte Vertragsstaaten :
**AT BE CH FR GB IT LI LU NL SE**

(56) Entgegenhaltungen :
**DE A 2 117 319**
**DE A 2 631 751**
**DE A 2 749 936**
**FR A 411 879**
**FR A 844 582**
**FR A 2 206 157**
**US A 1 359 020**
**US A 3 561 115**

(73) Patentinhaber : **Rochelt, Günter**
**Josef-Schwarz-Weg 11**
**D-8000 München-Solln (DE)**

(72) Erfinder : **Rochelt, Günter**
**Josef-Schwarz-Weg 11**
**D-8000 München-Solln (DE)**

(74) Vertreter : **Einsele, Rolf et al**
**Braun Aktiengesellschaft Postfach 1120 Frankfurter**
**Strasse 145**
**D-6242 Kronberg Taunus (DE)**

## Schwingkörper zur Umwandlung einer Drehbewegung in eine hin- und hergehende Bewegung

Die Erfindung betrifft einen Schwingkörper zur Umwandlung einer Drehbewegung eines Kurbelzapfens einer Motorwelle in eine etwa achsgleich zu dieser gerichteten hin- und hergehende Bewegung eines Schwingbalkens mittels einer Schwingarm-Winkelhebel-Anordnung, die im Bereich der Verbindung der Winkelarme an einem feststehenden Gehäuseteil angelenkt ist.

Ein solcher Schwingkörper ist aus der US-A-3 561 115 bekannt, wo er zum Antrieb des bewegten Scherkammes einer Haarschneidemaschine eingerichtet ist. Nachteilig bei dieser bekannten Anordnung ist es, daß der freie Arm des Winkelhebels, der mit dem Schwingbalken — hier das Schermesser — gelenkig verbunden ist, keine exakte geradlinige Bewegung ausführt, sondern im Anlenkpunkt eine Kreisbewegung um den Anlenkpunkt des Winkelhebels am Gehäuse.

Während die Elemente des Schwingkörpers bei dieser bekannten Ausführung noch als Einzelteile, teilweise in Kunststoff, ausgebildet und einzeln montiert sind, ist es aus der DE-A-21 17 319 schließlich auch prinzipiell bekannt, einen Schwingkörper mit all seinen wesentlichen Elementen einstückig aus Kunststoff herzustellen und dabei die Gelenke als sogenannte Filmscharniere auszubilden, wobei unter Filmscharnieren im Querschnitt verdünnte leistenartige Bereiche zu verstehen sind, die eine Biegeachse definieren, um die die über das Filmscharnier verbundenen Elemente oder Abschnitte eines Elementes schwingbar oder elastisch verbiegbar sind.

Aufgabe der vorliegenden Erfindung ist es daher, einen einfach aufgebauten und in wirtschaftlicher Weise herstellbaren Schwingkörper der eingangs angegebenen Art zu schaffen, der die Drehbewegung in eine kinematisch exakte geradlinig hin- und hergehende, translatorische Bewegung umwandelt, die mit der Drehachse der Drehbewegung fluchtet.

Erfindungsgemäß wird diese Aufgabe durch zwei Winkelhebel gelöst, die mit ihren aufeinander zulaufenden, im Ruhezustand etwa miteinander fluchtenden Armen durch ein Filmscharnier miteinander verbunden sind, auf dem mittig und vertikal zur Längserstreckung der Arme durch ein Filmscharnier der Schwingbalken befestigt ist, und durch elastische Schwingarme, die an den Enden der freien Arme der Winkelhebel mittels Filmscharniere befestigt sind und an ihren freien Enden seitlich mit Schlitzen versehene Lagerbohrungen aufweisen, mit denen sie auf die Kurbelzapfen der doppelt gekröpften Motorwelle aufgeschoben sind.

Bei dem erfindungsgemäßen Schwingkörper stabilisieren sich die beiden Winkelhebel gegenseitig, so daß der Schwingbalken ohne zusätzliche Parallelführung eine mit der Drehachse des Antriebsmotors fluchtende geradlinige Hin- und Herbewegung ausführt.

Der erfindungsgemäße Schwingkörper läßt sich in einfacher Weise billig aus Kunststoff herstellen und besteht vorzugsweise aus einem einstückigen Kunststoffspritzgußteil.

Der erfindungsgemäße Schwingkörper selbst weist nur geringe Verluste auf, weil im wesentlichen nur eine Reibung zwischen dem Kurbelzapfen der Welle und der Lagerbohrung des Schwingarms besteht, und weil die zur elastischen Verformung der Filmscharniere aufgewendete Energie bei der Auslenkung der Filmscharniere in die entgegengesetzte Richtung zurückgewonnen wird, so daß nur geringe Hystereseverluste entstehen. Besonders verlustarm wird der erfindungsgemäße Antrieb, wenn dieser so ausgelegt wird, daß die Eigenfrequenz seines Schwingungssystems mit der von diesem erzeugten Antriebsfrequenz übereinstimmt.

Der erfindungsgemäße Schwingkörper läßt sich für die unterschiedlichsten Anwendungsfälle einsetzen, für die nur einige Beispiele angegeben werden sollen : von Kleinmotoren angetriebene stabförmige Nagelfeilen, Kosmetikrasierer mit gegenläufigen Messern, Stabrasierer, deren Messerzylinder in einem Siebzylinder auf- und abbewegt wird, Zahnbürsten, Massagegeräte aller Art, elektrische Messer, Heckenscheren, Parallelrasenmäher, Stichsägen und Feilen, Antriebe für Pumpen, Kleinkompressoren, Spritzpistolen, Schlagwerke für Bohrer, wobei die Bohrspindel den translatorisch schwingenden Schwingbalken axial durchsetzen würde.

Zweckmäßigerweise sind die die Winkelhebel haltenden Filmscharniere an mit dem Gehäuse verbundenen, elastischen und parallel zueinander verlaufenden Stützen befestigt, die die quer zur Drehachse verlaufenden kleinen translatorischen Bewegungen der Winkelhebel ausgleichen.

Die die Winkelhebel haltenden Filmscharniere können auch an um gehäusefeste Bolzen schwenkbaren Klötzen befestigt sein, die durch eine elastische Leiste mit zu den Bolzen paralleler Biegelinie miteinander verbunden sind.

Falls der Schwingbalken nicht schon durch das von diesen angetriebene Element eine ausreichende parallele Führung erfährt, kann eine besondere Parallelführung vorgesehen werden.

Nach einer weiteren erfinderischen Ausgestaltung besteht diese besondere Parallelführung darin, daß der Schwingbalken mit der elastischen mittleren Leiste eines Parallelschwingrahmens mittig und rechtwinkelig verbunden ist, der aus parallel zueinander verlaufenden endseitigen Schwingbalken besteht, an denen die Enden der mittleren Leiste und beidseits im Abstand von dieser je zwei weitere elastische Leisten befestigt sind, deren innere Enden an gehäusefesten Stegen befestigt sind, deren Mittellinien miteinander fluchten, zu den äußeren Schwingbalken parallel verlaufen und den Schwingbalken rechtwinkelig und mittig durchsetzen. Führt der mit der Antriebswelle fluchtende Schwingbalken eine hin- und hergehende Bewegung aus, schwingen die seitlichen Schwingbalken in einer Querebene hin und her und stabilisieren den zentralen Schwingbalken in seiner Mittellage.

Die Verbindung der Schwingarme mit den Kurbelzapfen der Motorwelle wird dadurch erleichtert, daß die Lagerbohrungen der Schwingarme mit Schlitzen zum seitlichen Aufschieben auf die Kurbelzapfen versehen sind.

In weiterer Ausgestaltung der Erfindung können die Arme des Winkelhebels einen von 90° abweichenden Winkel miteinander einschließen und/oder eine unterschiedliche Länge aufweisen. Diese Maßnahmen können zweckmäßig sein, um bestimmte Übersetzungsverhältnisse zu erreichen. Ist der von dem Kurbelzapfen über den Schwingarm angetriebene Arm kürzer als der den Schwingbalken tragende Arm, wird beispielsweise die translatorische Bewegung des Schwingbalkens größer als die doppelte Exzentrizität des Kurbelzapfens.

Schließen die Arme des Winkelhebels einen von 90° abweichenden Winkel miteinander ein, kann die Abweichung des Schwingkörpers von einer geradlinigen translatorischen Bewegung größer werden. Falls diese Abweichung nicht in Kauf genommen werden kann, kann diese durch die Parallelführung geglättet werden.

Ausführungsbeispiele der Erfindung sind nachstehend anhand der Zeichnung näher erläutert. In dieser zeigt :

Figur 1 eine perspektivische Ansicht eines Antriebs zur Umwandlung einer Drehbewegung in eine hin- und hergehende Bewegung mit einem einen Winkelhebel bildenden Schwingkörper, welche das Grundprinzip der Erfindung erläutern soll,

Figur 2 eine schematische Darstellung der Bewegungsabläufe des Antriebs nach Fig. 1,

Figur 3 eine perspektivische Ansicht eines Antriebs zur Umwandlung einer Drehbewegung in eine hin- und gergehende Bewegung mit zwei durch ein Filmscharnier miteinander verbundenen, Winkelhebel bildenden Schwingkörpern,

Figur 4 eine schematische Darstellung der Bewegungsabläufe des Antriebs nach Fig. 3,

Figur 5 einen der Fig. 3 entsprechenden Antrieb mit einem den zentralen Schwingbalken stabilisierenden Parallelschwingrahmen in perspektivischer Ansicht und

Figur 6 eine schematische Darstellung der Bewegungsabläufe des Antriebs nach Fig. 5.

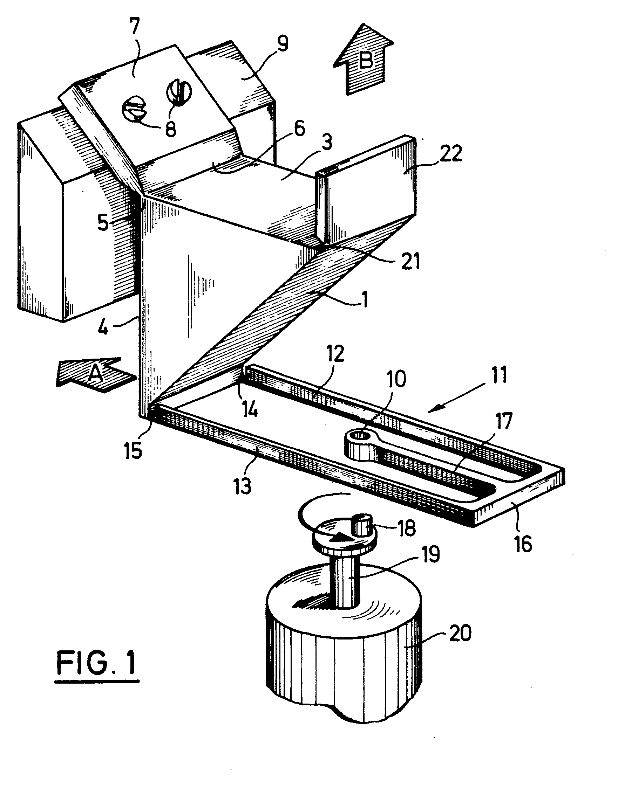

Bei dem in Fig. 1 dargestellten Antrieb, welcher das Grundprinzip der Erfindung erläutern soll, weist der einen Winkelhebel bildende Schwingkörper 1 im Vertikalschnitt die Form eines rechtwinkeligen, gleichschenkeligen Dreiecks auf, wobei die die Katheten bildenden Seiten 3, 4 die Arme bilden. Im Bereich der Ecke 5 ist der Schwingkörper 1 durch ein Filmscharnier 6 mit einem Halteteil 7 verbunden, das durch Schrauben 8 an dem nur ausschnittweise dargestellten Gehäuse 9 befestigt ist. An dem freien Ende des durch die Seite 4 des Schwingkörpers 1 gebildeten Arms ist der mit der Lagerbohrung 10 versehene Schwingarm 11 befestigt. Der Schwingarm 11 besteht aus einem rechteckigen Schwingrahmen, dessen langen Seiten aus Leisten 12, 13 gebildet sind, die Filmscharniere mit vertikalen Biegeachsen darstellen. Die Leisten 12, 13 sind über verdünnte Bereiche 14, 15 mit dem Arm 4 verbunden, die Filmscharniere mit horizontalen Biegeachsen bilden. Die Leisten 12, 13 sind endseitig durch eine Leiste 16 miteinander verbunden, an der mittig ein Arm 17 befestigt ist, der an seinem freien Ende mit der Lagerbohrung 10 für den Kurbelzapfen 18 versehen ist. Der Arm 17 ist ebenfalls durch eine Leiste gebildet, die ein Filmscharnier mit vertikaler Biegeachse schafft.

Der Kurbelzapfen 18 ist exzentrisch auf der Welle 19 des Elektromotors 20 befestigt.

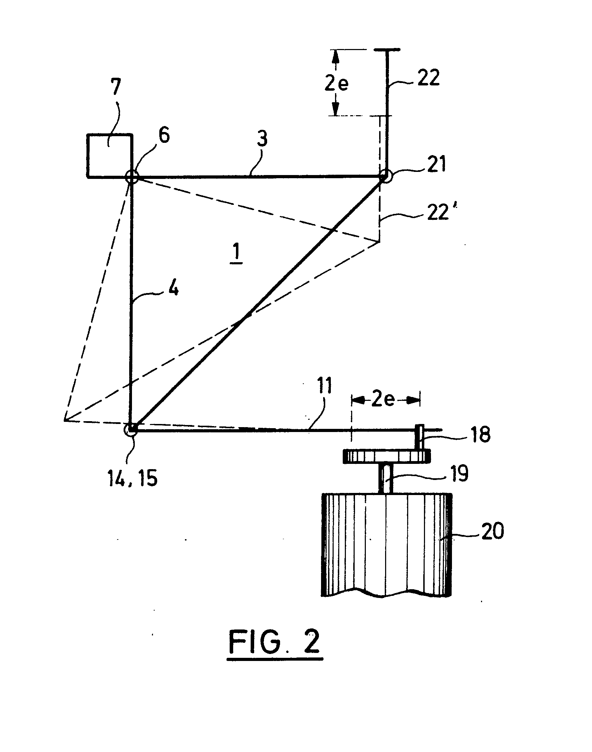

An dem freien Ende des durch die Seite 3 des Schwingkörpers 1 gebildeten Arms ist durch das Filmscharnier 21 der Schwingbalken 22 befestigt. Der Schwingbalken 22 ist in nicht dargestellter Weise mit dem Element verbunden, das translatorisch hin- und hergehend anzutreiben ist. Die Bewegungsrichtungen der freien Enden der Arme 3, 4 sind durch die Pfeile A und B angedeutet. Die Kinematik des in Fig. 1 dargestellten Antriebs wird nun anhand der Fig. 2 kurz erläutert. Die Endstellungen des von dem Kurbelzapfen 18 der Antriebswelle 19 über den Schwingarm 11 verschwenkten Schwingrahmens 1 sind durch ausgezogene und gestrichelte Linien dargestellt. In beiden Endstellungen fluchtet der Schwingbalken 22 etwa mit der Achse der Antriebswelle 19.

In der linken Endstellung ist der gestrichelt gezeichnete Schwingbalken 22' geringfügig gegenüber dem in der rechten Endstellung befindlichen und in vollen Linien dargestellten Schwingbalken 22 nach links versetzt. Dieser geringe Versatz wird durch Auslenkung des Schwingbalkens 22 um das Filmscharnier 21 ausgeglichen.

Da die Arme 3, 4 des Schwingkörpers 1 gleich lang sind, führt der Schwingbalken 22 einen Hub aus, der etwa der doppelten Exzentrizität 2e des Kurbelzapfens 18 entspricht.

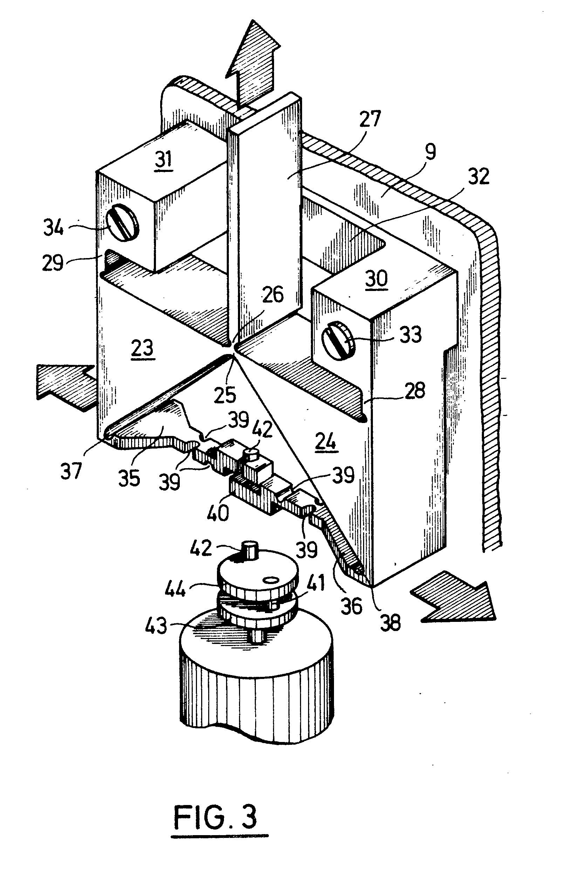

In Fig. 3 ist ein Antrieb dargestellt, bei dem zwei Winkelhebel bildende Schwingkörper 23, 24 an den freien Enden ihrer gegeneinander weisenden Arme durch ein Filmscharnier 25 miteinander verbunden sind. Nach oben ragend ist mittig auf dem Filmscharnier 25 durch ein weiteres Filmscharnier 26 der Schwingbalken 27 befestigt. In dem dargestellten Ausführungsbeispiel sind die Filmscharniere 25, 26 sternartig miteinander kombiniert. Die die Arme der Schwingkörper 23, 24 verbindenden Ecken sind durch leistenförmige Filmscharniere 28, 29 mit den Klötzen 30, 31 verbunden, die iherseits durch den Steg 32 miteinander verbunden sind. Durch Schrauben 33, 34 sind die Klötze 30, 31 an einer Gehäusewand 9 befestigt.

An den freien Enden der nach unten weisenden Arme der Schwingkörper 23, 24 sind die Schwingarme 35, 36 über Filmscharniere 37, 38 befestigt. Die Schwingarme sind mit weiteren rechtwinkelig zueinander verlaufenden Nuten 39 versehen, die deren Querschnitte schwächen, so daß Filmscharniere geschaffen werden, die den Schwingarmen 35, 36 Schwingungen sowohl in der Ebene der Winkelhebel als auch quer zu dieser Ebene gestatten.

Die an den freien Enden der Schwingarme 35, 36 befindlichen Lagerbohrungen sind mit Schlitzen 40 versehen, so daß sich die Lagerbohrungen seitlich auf die Kurbelzapfen 41, 42 aufdrücken lassen, die auf zueinander parallelen Durchmesserlinien der Scheiben 43, 44 angeordnet sind. Die Scheibe 44 mit ihrem Kurbelzapfen 42 wird von dem auf der Scheibe 43 befindlichen Kurbelzapfen 41 getragen.

Die leistenförmigen Filmscharniere 28, 29 sind so lang ausgebildet, daß die Schwingkörper 23, 24 zwanglos auch die erforderlichen translatorischen Bewegungen in einer horizontalen Ebene ausführen können.

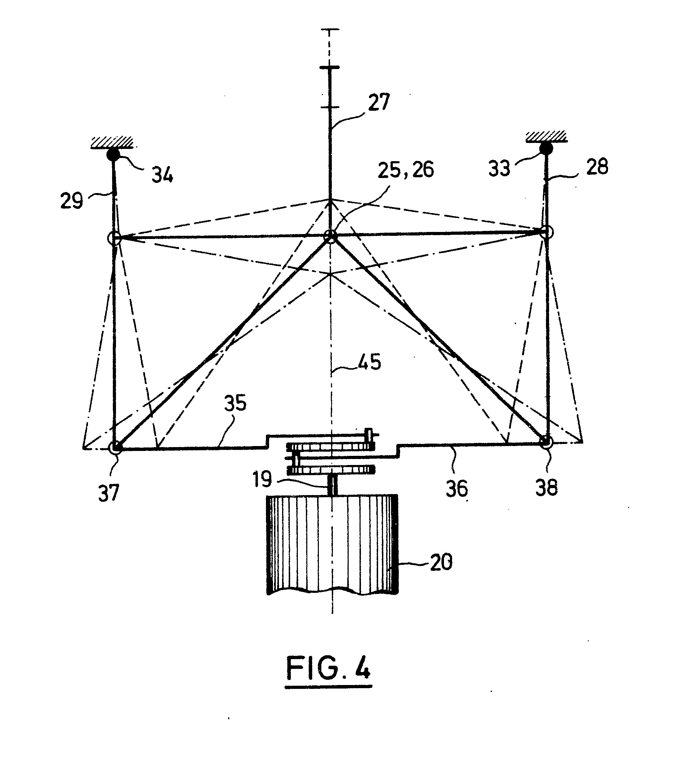

Die Kinematik des anhand der Fig. 3 dargestellten Antriebs ist in Fig. 4 schematisch dargestellt. Die mittlere Ruhelage ist mit ausgezogenen Linien gezeichnet, während die äußeren und inneren Endstellungen durch gestrichelte bzw. strichpunktierte Linien dargestellt sind. Die durch verringerte Querschnitte der Leisten gebildeten Filmscharniere sind durch Kreise eingezeichnet.

Wie aus einer Betrachtung der Fig. 4 ohne weiteres ersichtlich ist, wird die Drehbewegung der Motorwelle 19 in eine hin- und hergehende translatorische Bewegung des Schwingbalkens 27 umgewandelt, die mit der Achse 45 der Welle 19 fluchtet.

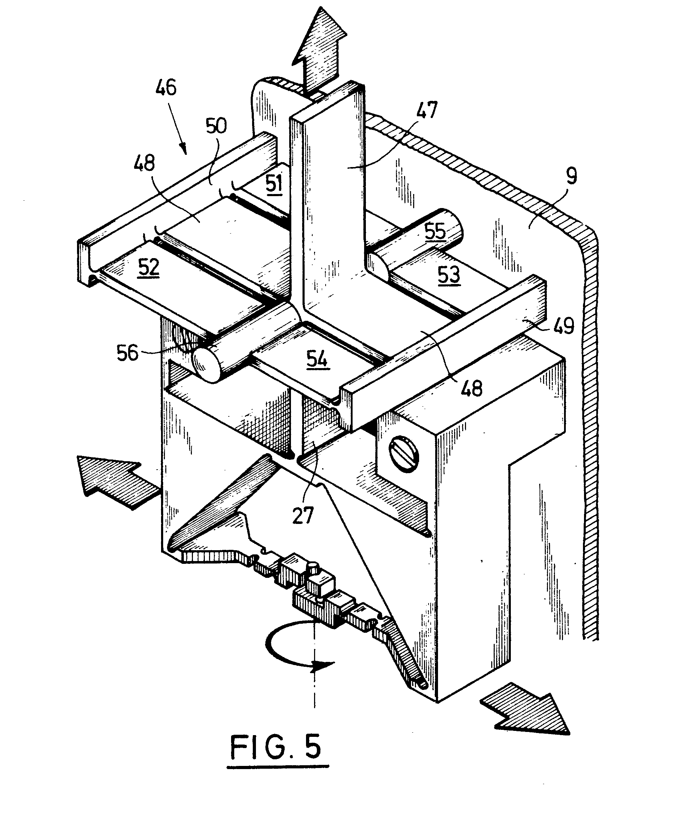

In Fig. 5 entspricht der die Drehbewegung in eine hin- und hergehende Bewegung umwandelnde untere Antriebsteil im wesentlichen dem anhand der Fig. 3 und 4 beschriebenen Antrieb, so daß dieser nicht nochmals beschrieben wird. Der Schwingbalken 27 wird bei der Ausführungsform nach Fig. 5 jedoch durch einen Parallelschwingrahmen 46 zusätzlich stabilisiert, der nachstehend noch kurz erläutert wird. Der Schwingbalken 27 durchsetzt mit seinem oberen Teil 47 mittig und rechtwinkelig eine mittlere Filmscharniere bildende Leiste 48, die an ihren freien Enden mit seitlichen, frei schwingbaren Schwingbalken 49, 50 mittig verbunden ist. Die Leiste 48 ist seitlich von ebenfalls Filmscharniere bildenden Leisten 51 bis 54 eingefaßt, die mit ihren äußeren Enden mit den seitlichen Schwingbalken 49, 50 und ihren inneren Enden mit den Stegen 55, 56 verbunden sind, die an dem Gehäuse befestigt sind. Der Steg 55 ist also an der Gehäusewand 9 befestigt und der Steg 56 in nicht dargestellter Weise an der gegenüberliegenden Gehäusewand. Die Leisten 51 bis 54 bilden mit den endseitigen Schwingbalken 49, 50 einen rechtwinkeligen Rahmen. Die Leisten 48 und 51 bis 54 verlaufen parallel zueinander, wobei die Leiste 48 einen etwa doppelt so großen Querschnitt aufweist als die diese einfassenden Leisten, damit die federnde Eigenschaft der mittleren Leiste 48 der der beiden äußeren Leisten zusammen entspricht.

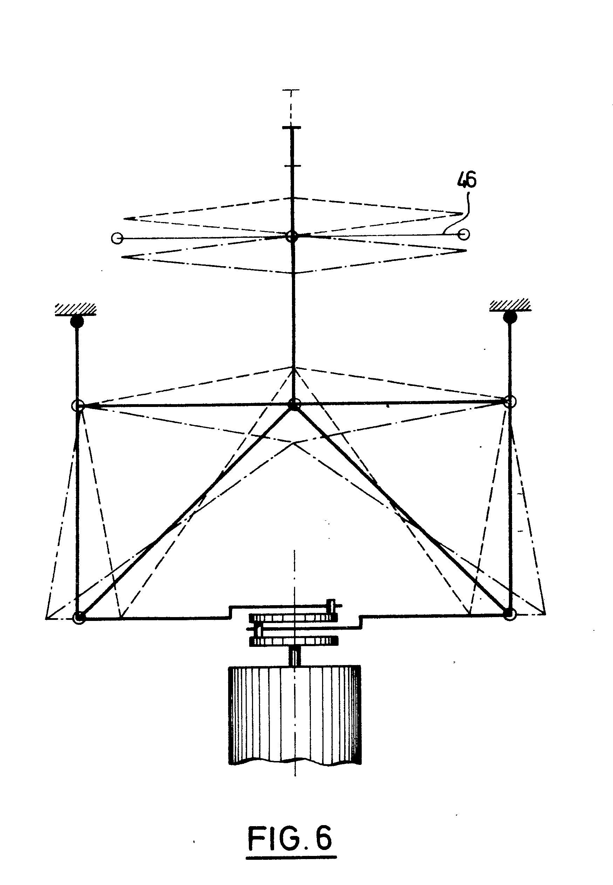

In Fig. 6 ist der Schwingrahmen 46 mit ausgezogenen Linien in seiner mittleren Ruhestellung und mit gestrichelten Linien in seiner ausgefederten, oberen und mit strichpunktierten Linien in seiner ausgefederten, unteren Stellung dargestellt. Die seitlichen Schwingbalken vollführen zu ihrer auf- und abgehenden vertikalen Bewegung eine geringe hin- und hergehende Bewegung in horizontaler Richtung, so daß der Schwingbalken 28, 47 geradlinig auf seiner mit der Achse der Antriebswelle fluchtenden Linie geführt ist.

## Ansprüche

1. Schwingkörper zur Umwandlung einer Drehbewegung eines Kurbelzapfens einer Motorwelle in eine etwa achsgleich zu dieser gerichteten hin- und hergehende Bewegung eines Schwingbalkens mittels einer Schwingarm-Winkelhebel-Anordnung, die im Bereich der Verbindung der Winkelarme an einem feststehenden Gehäuseteil angelenkt ist, gekennzeichnet durch zwei Winkelhebel (23, 24), die mit ihren aufeinander zulaufenden, im Ruhezustand etwa miteinander fluchtenden Armen durch ein Filmscharnier (25) miteinander verbunden sind, auf dem mittig und vertikal zur Längserstreckung der Arme durch ein Filmscharnier (26) der Schwingbalken (27) befestigt ist, und durch elastische Schwingarme (35, 36), die an den Enden der freien Arme der Winkelhebel (23, 24) mittels Filmscharniere (37, 38) befestigt sind und an ihren freien Enden seitlich mit Schlitzen (40) versehene Lagerbohrungen aufweisen, mit denen sie auf die Kurbelzapfen (41, 42) der doppelt gekröpften Motorwelle (19) aufgeschoben sind.

2. Schwingkörper nach Anspruch 1, dadurch gekennzeichnet, daß die die Winkelhebel (23, 24) halternden Filmscharniere (28, 29) an mit dem Gehäuse (9) verbundenen, elastischen und parallel zueinander verlaufenden Stützen befestigt sind.

3. Schwingkörper nach Anspruch 1, dadurch gekennzeichnet, daß die die Winkelhebel (23, 24) halternden Filmscharniere (28, 29) an um gehäuse feste Bolzen schwenkbaren Klötzen (30, 31) befestigt sind, die durch eine elastische Leiste mit zu den Bolzen paralleler Biegeachse miteinander verbunden sind.

4. Schwingkörper nach Anspruch 1, dadurch gekennzeichnet, daß der Schwingbalken (27) mit einer Parallelführung (46) versehen ist.

5. Schwingkörper nach Anspruch 4, dadurch gekennzeichnet, daß der Schwingbalken (27, 47) mit der elastischen mittleren Leiste (48) eines Parallelschwingrahmens (46) mittig und rechtwinkelig verbunden ist, der aus parallel zueinander verlaufenden endseitigen Schwingbalken (49, 50) besteht, in denen die Enden der mittleren Leiste (48) und beidseits im Abstand von diesen je zwei weitere elastische Leisten (51-54) befestigt sind, deren innere Enden an gehäusefesten Stegen (55, 56) befestigt sind, deren Mittellinien miteinander fluchten, zu den äußeren Schwingbalken (49, 50) parallel verlaufen und den Schwingbalken (27, 47) rechtwinkelig und mittig durchsetzen.

6. Schwingkörper nach einem der Ansprüche 1 bis 4, dadurch gekennzeichnet, daß die Schwingkörper, Schwingbalken und Filmscharniere mit ihren an dem Gehäuse zu befestigenden Halteteilen einstückig aus elastischem Kunststoff bestehen.

7. Schwingkörper nach Anspruch 1, dadurch gekennzeichnet, daß die Lagerbohrungen der Schwingarme mit Schlitzen (40) zum seitlichen Aufschieben auf die Kurbelzapfen (41, 42) versehen sind.

8. Schwingkörper nach Anspruch 1, dadurch gekennzeichnet, daß die Arme der Winkelhebel einen von 90° abweichenden Winkel miteinander einschließen und/oder eine unterschiedliche Länge aufweisen.

**Claims**

1. A rotating body for converting the rotating movement of a crank pin of a motor shaft into the to and fro movement of a rotating beam, this movement being in the same axial direction as the motor shaft, by means of a swing arm-angle lever arrangement which is pivoted in the area of the connection of the angle arms to a fixed housing section, characterised by two angle levers (23, 24) which are connected to one another by their arms, which are contiguous and in alignment with one another when in a stationary position, by means of a film hinge (25) to which the rotating beam (27) is attached centrally and perpendicularly to the longitudinal extension of the arms by means of a film hinge (26), and by flexible swing arms (35, 36), which are attached to the ends of the free arms of the angle levers (23, 24) by means of film hinges (37, 38) and which have bearing elements provided with slots (40) laterally in their free ends, these swing arms being pushed on to the crank pins (41, 42) of the double right-angled motor shaft (19) by means of these bearing elements.

2. A rotating body according to claim 1, characterised in that the film hinges (28, 29) holding the angle levers (23, 24) are attached to flexible supports running parallel to one another and connected to the housing (9).

3. A rotating body according to claim 1, characterised in that the film hinges (28, 29) holding the angle levers (23, 24) are attached to blocks (30, 31) pivotal about bolts fixed to the housing, these blocks being connected to one another by a flexible strip with a bending axis parallel to the bolts.

4. A rotating body according to claim 1, characterised in that the rotating beam (27) is provided with a parallel construction (46).

5. A rotating body according to claim 4, characterised in that the rotating beam (27, 47) is connected centrally and perpendicularly with respect to a flexible central strip (48) of a parallel rotating frame (46), which consists of rotating beams (49, 50) running parallel to one another, to which the ends of the central strip (48) and two further flexible strips (51-54) on respective sides of and spaced from this central strip are attached, their inne ends being attached to crosspieces (55, 56) fixed to the housing, the centre lines of which are in alignment with each other, run parallel to the outer rotating beams (49, 50) and pass through the rotating beam (27, 47) centrally and perpendicularly.

6. A rotating body according to any one of claims 1 to 4, characterised in that the rotating bodies, rotating beams and film hinges, being in one piece with their supporting parts to be attached to the housing, consist of a flexible synthetic material.

7. A rotating body according to claim 1, characterised in that the bearing elements of the swing arms are provided with slots (40) to be laterally pushed on to the crank pins (41, 42).

8. A rotating body according to claim 1, characterised in that the arms of the angle levers form an angle deviating from 90 degrees and/or have a variable length.

**Revendications**

1. Corps oscillant pour la conversion du mouvement de rotation du maneton d'un arbre moteur en un mouvement de va-et-vient d'une traverse oscillante, sensiblement coaxial au mouvement de rotation, à l'aide d'un montage bras oscillants-leviers coudés articulé sur une partie fixe du bâti, au voisinage de la liaison des bras de leviers coudés, ledit corps oscillant étant caractérisé par deux leviers coudés (23, 24) dont les bras en regard, sensiblement alignés au repos, sont reliés par une charnière plate (25) sur laquelle la traverse oscillante (27) est fixée par une charnière plate (26) au milieu de et perpendiculairement à l'axe longitudinal des bras ; et par des bras oscillants élastiques (35, 36), fixés par des charnières plates (37, 38) sur les extrémités des bras libres des leviers coudés (23, 24), et dont les extrémités libres présentent latéralement des logements de palier munis de fentes (40) qui se glissent sur les manetons (41, 42) de l'arbre moteur (19) à deux manetons.

2. Corps oscillant selon la revendication 1, caractérisé en ce que les charnières plates (28, 29) maintenant les leviers coudés (23, 24) sont fixées sur des supports élastiques, parallèles et reliés au bâti (9).

3. Corps oscillant selon la revendication 1, caractérisé en ce que les charnières plates (28, 29) maintenant les leviers coudés (23, 24) sont fixées sur des blocs (30, 31) pivotant sur des boulons solidaires du bâti et reliés par une réglette élastique à axe de flexion parallèle aux boulons.

4. Corps oscillant selon la revendication 1, caractérisé en ce que la traverse oscillante (27) comporte un guide parallèle (46).

5. Corps oscillant selon la revendication 4, caractérisé en ce que la traverse oscillante (27, 47) est reliée au milieu de et perpendiculairement à la réglette élastique médiane (48) d'un cadre oscillant parallèle, constitué par les traverses oscillantes d'extrémité parallèles (49, 50), dans lesquelles sont fixées les extrémités de la réglette médiane (48) et, de chaque côté de cette dernière, deux autres réglettes élastiques (51-54) dont les extrémités intérieures sont fixées sur des barrettes (55, 56) solidaires du bâti, dont les axes sont alignés, qui sont parallèles aux traverses oscillantes extérieures (49, 50) et traversent perpendiculairement les traverses oscillantes (27, 47) en leur milieu.

6. Corps oscillant selon une quelconque des revendications 1 à 4, caractérisé en ce que les corps oscillants, les traverses oscillantes et les charnières plates sont constitués, avec leurs pièces de fixation sur le bâti, en une seule pièce en matière plastique élastique.

7. Corps oscillant selon la revendication 1, caractérisé en ce que les logements de palier des bras oscillants présentent des fentes (40) pour l'emmanchement latéral sur les manetons (41, 42).

8. Corps oscillant selon la revendication 1, caractérisé en ce que les bras des leviers coudés forment un angle différent de 90° et/ou présentent une longueur différente.

# FIG. 1

## FIG. 2

FIG. 3

FIG. 4

FIG. 5

FIG. 6